# EUROPÄISCHE PATENTSCHRIFT

(11) **EP 0 860 337 B1**
(45) Veröffentlichungstag und Bekanntmachung des Hinweises auf die Patenterteilung: **17.04.2002**
(21) Anmeldenummer: 98101971.4
(22) Anmeldetag: 05.02.1998
(51) Int. Cl.: B60T 13/58, B60T 13/66, B60T 8/00, B60T 11/10, B60K 41/24, B60K 41/20

(54) **Fahrzeugbremse eines Nutzfahrzeuges**
Vehicle brake for a utility vehicle
Frein de véhicule pour véhicule utilitaire

(30) Priorität: 19.02.1997 DE 19706451
(43) Veröffentlichungstag der Anmeldung: 26.08.1998
(73) Patentinhaber: MAN Nutzfahrzeuge Aktiengesellschaft, 80976 München (DE)
(72) Erfinder: Kirchmeier, Klaus, 85737 Ismaning (DE); Scherle, Alwin, Dipl.-Ing. (FH), 82131 Gauting (DE); Lemon, Uwe, Dipl.-Ing. (FH), 85229 Markt Indersdorf (DE)

(56) Entgegenhaltungen:
- DE-A- 4 207 965
- DE-A- 19 642 344

## Beschreibung

Die Erfindung betrifft eine Fahrzeugbremse für ein Nutzfahrzeug gemäß dem Oberbegriff des Anspruches 1.

Aus der DE 30 27 747 C2 ist ein Regelsystem für eine Fahrzeugbremsanlage mit einer Betriebsbremse und einer Dauerbremse bekannt. Bei dem bekannten Regelsystem ist als Maß für das gewünschte Gesamtbremsmoment der Bremspedalweg oder die Bremspedalkraft verwendet und das jeweilige Gesamtbremsmoment erstrangig durch die Dauerbremse erzeugt. Somit wird immer zuerst die größtmögliche Bremsmomentabgabe von der Dauerbremse erreicht. Die Betriebsbremse ist über das Regelsystem so geregelt, daß sie die Differenz zwischen dem vorgegebenen Gesamtbremsmoment und dem von der Dauerbremse aufgebrachten Bremsmoment erzeugt. Das Regelsystem optimiert das Zusammenwirken von Betriebsbremse und Dauerbremse, unabhängig von der durch eine Bedienungsperson erfolgten Bremspedalbetätigung.

Aus der DE 42 07 965 A1 ist eine Fahrzeugbremsanlage bekannt, die sowohl eine Betriebsbremse (Reibungsbremse) als auch eine verschleißfreie Dauerbremse (z. B. Retarder oder Motorbremse) aufweist. Die bekannte Fahrzeugbremsanlage ist so ausgelegt, daß sie zwischen einer Dauerbremsung und einer Schnellbremsung unterscheidet. Bei relativ langsamer Betätigung eines über ein Bremspedal angesteuerten Bremswertgebers wird zunächst die Dauerbremse wirksam. Mit zunehmendem Betätigungsweg des Bremspedals folgt dann ein relativ spätes und langsames Ansteuern der Betriebsbremse. Bei einer schnellen Betätigung des Bremswertgebers mittels Bremspedal wird dagegen die Betriebsbremse schnell und mit schnellem Anstieg wirksam gemacht.

Der Erfindung liegt die Aufgabe zugrunde, ohne technischen Mehraufwand den Verschleiß an einer Fahrzeugbremse zu reduzieren, sowie deren Betätigungskomfort und damit die Verkehrssicherheit des Fahrzeugs zu erhöhen.

Diese Aufgabe wird erfindungsgemäß durch die kennzeichnenden Merkmale des Anspruches 1 gelöst.

Durch die erfindungsgemäße Fahrzeugbremse ist sichergestellt, daß bei jeder Betätigung eines Bremspedals einer Fahrzeugbremse wenigstens eine zusätzliche Dauerbremse vorrangig vor einer Betriebsbremse aktiviert und zunächst bleibend mit in den Bremsprozeß des Fahrzeuges integriert ist. Die zunächst bleibende Aktivierung der wenigstens einen Dauerbremse ist durch Betätigung des Bremspedals in einem definierten, vordersten Abschnitt seines Betätigungsweges ausgelöst. Die Betätigung kann ein wenigstens einmaliges, leichtes Antippen oder eine normale, größerhubige Betätigung des Bremspedals sein. Wird bei Betätigung des Bremspedals dieser vorderste Abschnitt innerhalb eines sich daran anschließenden definierten hinteren Abschnittes des Betätigungsweges des Bremspedals überschritten, wird mit zunehmendem Betätigungsweg des Bremspedals die Bremswirkung der nachrangig aktivierten Betriebsbremse der Bremswirkung der vorrangig aktivierten Dauerbremse zugesteuert.

Eine Deaktivierung der zunächst bleibend gesetzten wenigstens einen Dauerbremse kann durch Betätigung eines Fahr- oder Kupplungspedals erfolgen. Diese Deaktivierung kann im vordersten Betätigungsweg des Fahr- oder Kupplungspedals, beispielsweise durch ein leichtes Antippen oder Betätigen desselben, ausgelöst werden. Die Deaktivierung der Betriebsbremse ist durch das Wiederverlassen des definierten, hinteren Abschnittes des Betätigungsweges des Bremspedals gegeben.

In vorteilhafter Weise kann somit sowohl die Betriebsbremse als auch die wenigstens eine Dauerbremse nur mit dem rechten Fuß über ein einziges Bremspedal betätigt werden. Die wenigstens eine Dauerbremse bleibt dabei bis zu ihrer Deaktivierung mittels Betätigung eines Fahr- oder Kupplungspedals gesetzt. So kann beispielsweise bei Gefällefahrt der Bremsfuß des Fahrers nach dem Setzen der wenigstens einen Dauerbremse frei bleiben. Ein bislang hierfür notwendiges, permanentes Drücken eines Tasters zur Aktivierung einer Dauerbremse ist nicht erforderlich. Der vom vermeidbaren Bedienungsaufwand befreite Fahrer wird auf diese Weise entlastet und kann sich intensiv dem Verkehrsgeschehen widmen.

Da beim Bremseinsatz des Fahrzeuges die wengistens eine Dauerbremse stets vorrangig vor der Betriebsbremse zur Funktion gebracht ist, kann die Betriebsbremse in ihrer Bremsarbeit durch die Dauerbremse entlastet bzw. ergänzt werden. Hierdurch kann in vorteilhafter Weise eine Reduzierung des Verschleißes an der Betriebsbremse erzielt werden.

Als Fahrzeugbremse kann beispielsweise eine herkömmliche Druckluft-Bremsanlage oder eine elektronisch geregelte Bremsanlage vorgesehen sein. Die Betriebsbremse des Fahrzeuges kann durch eine Reibungsbremse und die wenigstens eine Dauerbremse durch eine Motorbremse und/oder einem Retarder realisiert sein.

Bei Vorsehen einer Motorbremse als Dauerbremse kann diese beispielsweise als Drosselklappenbremse oder als Kipphebelbremse (EVB, exhaust valve brake) ausgeführt sein. Die Motorbremse kann während einer Gefällefahrt nach wenigstens einem einmaligen leichten Antippen oder Betätigen des Bremspedals in einem definierten Abschnitt seines vordersten Betätigungsweges dauerhaft gesetzt bleiben, auch wenn gelegentlich die Betriebsbremse, beispielsweise beim Abbremsen in einer Kurve, durch ein Betätigen des Bremspedals in einem mittleren oder hinteren Abschnitt seines Betätigungsweges zugesteuert wird. Die noch vor dem Wirksamwerden der Betriebsbremse aktivierbare Motorbremse bleibt während dieses Bremsvorganges gesetzt, auch wenn durch ein Durchtreten des Bremspedals eine Überlagerung durch die Betriebsbremse stattfindet, oder der Fuß des Fahrers wieder vom Bremspedal genommen wird.

In weiterer Ausgestaltung der Erfindung kann als wenigstens eine Dauerbremse ein Retarder vorgesehen sein, der nach wenigstens einem einmaligen Antippen oder Betätigen des Bremspedals im definierten Abschnitt seines vordersten Betätigungsweges aktiviert ist. Als Retarder können Primär- oder Sekundärretarder vorgesehen sein. Zusätzlich zum Retarder kann auch eine Motorbremse vorgesehen sein, die wie dieser gemeinsam über das Bremspedal aktiviert und über das Fahr- oder Kupplungspedal deaktiviert wird.

Gemäß einer weiterführenden Ausgestaltung der Erfindung kann die Aktivierung des Retarders durch aufeinanderfolgendes, separates Antippen, Betätigen oder durch Verweilen des Bremspedals im definierten Abschnitt seines vordersten Betätigungsweges gestuft steigerbar ausgelöst sein. Es kann vorteilhaft sein, die gestuft steigerbare Aktivierung des Retarders durch Verweilen in einer definierten Stellung des Bremspedals in einem vordersten Abschnitt seines Betätigungsweges auszulösen. Der Fahrer verweilt dabei mit seinem Fuß auf dem Bremspedal in der definierten Stellung und wartet die vom Bremswertgeber über ein Steuergerät auf den Retarder übertragenen Signale der gestuften Bremsstärkenerhöhung ab, bis die gewünschte Bremsstärke am Retarder erreicht ist. Ist zusätzlich zum Retarder eine Motorbremse vorgesehen, gelten prinzipiell die genannten Bedingungen. Demzufolge bleibt bei betätigtem Bremspedal die zusätzliche Motorbremse gesetzt, während die Bremswirkung des Retarders bis zu der angeforderten Bremsstärke ansteigt. Bei Überschreiten des Abschnittes des vordersten Betätigungsweges des Bremspedals kommt mit dessen zunehmendem Betätigungsweg auch die Betriebsbremse verstärkt zum Einsatz.

In weiterer Ausgestaltung der Erfindung kann die Deaktivierung des Retarders durch aufeinanderfolgendes Antippen oder Betätigen des Fahr- oder Kupplungspedals in einem vorderen ersten Betätigungsweg gestuft auslösbar sein. Durch die gestufte Aktivierung und Deaktivierung des Retarders ist dem Fahrer eine dosierte Einflußnahme auf die Geschwindigkeit des Fahrzeuges bei einer längerwährenden Bremsung, beispielsweise während einer Gefällefahrt, gegeben. Eine gegebenenfalls zusätzlich zum Retarder vorgesehene Motorbremse ist in diesem Fall bereits durch ein einmaliges Antippen oder Betätigen des Fahr- oder Kupplungspedals vollständig deaktiviert.

Gemäß einer weiterführenden Ausgestaltung der Erfindung kann die Deaktivierung des Retarders durch eine einmalige Betätigung des Fahr- oder Kupplungspedals in einem dem ersten Betätigungsweg nachgeordneten zweiten Betätigungsweg vollständig ausgelöst sein (Kickdown-Funktion). Beim Übergang vom ersten Betätigungsweg zum zweiten Betätigungsweg des Fahr- oder Kupplungspedals kann ebenfalls ein definierter, vom Fahrer wahrnehmbarer Druckpunkt zu überwinden sein. Damit ist dem Fahrer die vollständige Deaktivierung des Retarders angezeigt.

In weiterer Ausgestaltung der Erfindung kann bei Beginn der Aktivierung der Betriebsbremse, etwa nach Überschreiten des ersten Abschnittes des Betätigungsweges des Bremspedals, ein definierter, vom Fahrer wahrnehmbarer Druckpunkt zu überwinden sein. Damit kann dem Fahrer im Verlauf des Bremsvorganges das Wirksamwerden der aktivierten Betriebsbremse bewußt gemacht werden.

In weiterer Ausgestaltung der Erfindung kann die durch eine Motorbremse und/oder einem Retarder realisierte Dauerbremse bei Ausfall oder während des Regelvorganges eines gegebenenfalls installierten ABS-Systems automatisch abgeschaltet werden. Damit ist dem Fahrer in einer Ausnahmesituation die Möglichkeit gegeben, die noch aktivierbare Betriebsbremse alleinverantwortlich zu betätigen.

Gemäß einer weiteren Ausgestaltung der Erfindung kann bei Abschluß des Regelvorganges des ABS-Systems der Dauerbremse ein Signal ihrer letztaktuellen Bremsstärke über ein der Fahrzeugbremse zugehöriges Steuergerät zugänglich gemacht werden. Bei Bedarf wird dann durch entsprechende Beaufschlagung der Dauerbremse (Retarder) von dieser Option der gemerkten Bremskraftstärke Gebrauch gemacht.

In weiterer Ausgestaltung der Erfindung kann eine manuelle oder eine elektronisch geregelte, lastabhängige Abschaltung der wenigstens einen Dauerbremse vorgesehen sein. Diese Abschaltungen können beispielsweise bei Sattelzugmaschinen von Vorteil sein, die als Solofahrzeuge lediglich eine reduzierte Bremswirkung der Dauerbremse benötigen oder aber deren Totalabschaltung erfordern. Gegebenenfalls kann bei Bedarf, beispielsweise bei Fahrzeugen mit Gefahrgut, eine alternative Betätigungsmöglichkeit der Motorbremse und/oder des Retarders vorgesehen sein. Die alternative Betätigungsmöglichkeit kann beispielsweise ein Handhebel oder dergleichen sein.

Nachfolgend ist die Erfindung anhand zweier in der Zeichnung dargestellter Ausführungsbeispiele näher erläutert. In der Zeichnung zeigen:
- Fig. 1: schematisch eine elektronisch geregelte Fahrzeugbremse und
- Fig. 2: schematisch eine Druckluft-Bremsanlage eines Fahrzeugs.

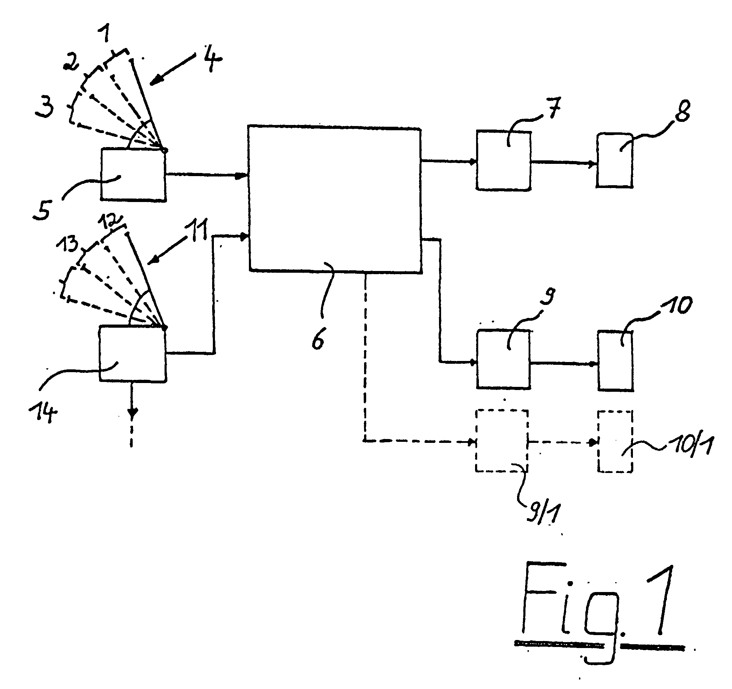

Fig. 1 zeigt schematisch vereinfacht eine im Blockschaltbild dargestellte elektronisch geregelte Fahrzeugbremse. Ein von einem Betätigungsweg 1, 2, 3 eines Bremspedals 4 abhängiger elektrischer Bremswertgeber 5 der Fahrzeugbremse ist an ein elektronisches Steuergerät 6 angeschlossen. Von diesem elektronischen Steuergerät 6 wird über ein Stellglied 7 eine Betriebsbremse 8 und über ein Stellglied 9 eine Dauerbremse 10 angesteuert. Die Betriebsbremse 8 ist beispielsweise durch eine Reibungsbremse realisiert. Als Dauerbremse 10 kann eine Motorbremse 10/1 und/oder ein Retarder 10 vorgesehen sein. Der Retarder 10 kann sowohl als Primärals auch als Sekundärretarder ausgeführt sein. Die alternativ oder zusätzlich zum Retarder 10 vorgesehene Motorbremse 10/1 ist in dem hier gezeigten Ausführungsbeispiel strichliert ausgeführt und über ein mit dem Steuergerät 6 verbundenes Stellglied 9/1 angesteuert. Die Motorbremse 10/1 kann beispielsweise als Drosselklappenbremse oder als Kipphebelbremse (EVB, exhaust valve brake) ausgeführt sein. Das Steuergerät 6 kann aus mehreren Steuergeräten bestehen, so z. B. aus einem EBS-Steuergerät und/oder einem Retarder-Steuergerät und/oder einem Fahrzeugführungsrechner.

Die Dauerbremse 10 kann durch kurzes, wenigstens einmaliges Antippen oder Betätigen des Bremspedals 4 in einem definierten Abstand seines vordersten Betätigungsweges 1 aktiviert werden. Während die aktivierte Dauerbremse 10 beispielsweise bei einer Gefällefahrt die Geschwindigkeit des Fahrzeuges konstant hält, kann die Funktion dieser Dauerbremse 10 durch eine vom Fahrer ausgelöste Anpassungsbremsung der zusätzlich aktivierten Reibungsbremse 8 überlagert werden. Hierzu wird bei Betätigung des Bremspedals 4 von diesem ein dem vordersten Betätigungsweg 1 nachgeordneter Betätigungsweg 2 durchschritten. Die Reibungsbremse 8 ist hierdurch nachrangig nach der Dauerbremse 10 innerhalb des zweiten Betätigungsweges 2 des Bremspedals 4 gesetzt.

Ist als Dauerbremse ein Retarder 10 vorgesehen, kann dessen Bremswirkung auch durch zeitlich definiertes Verweilen des Bremspedals 4 in einem definierten Abschnitt seines vordersten Betätigungsweges 1 gestuft steigerbar ausgelöst sein. Je nach Verweildauer des Bremspedals 4 in der Position seines vordersten Betätigungsweges 1, werden über den Bremswertgeber 5 und das Steuergerät 6 Signale an das Stellglied 9 ausgegeben, die den Retarder 10 zur Schaltung in seine nächsthöhere Bremsstärkenstufe veranlassen. Dieses gestufte Anheben der Bremswirkung des Retarders 10 ist auch bei Vorsehen einer zusätzlichen Motorbremse 10/1 gegeben. Die durch Retarder 10 und/oder Motorbremse 10/1 realisierte Dauerbremse 10 bleibt jedoch trotz Überlagerung durch die gegebenenfalls kurzfristig zusteuerbare Reibungsbremse 8 weiterhin gesetzt.

Die Funktion der Dauerbremse 10 wird durch ein kurzes Antippen oder einer normalen Betätigung eines am Steuergerät 6 angeschlossenen Fahr- oder Kupplungspedals 11 innerhalb eines Abschnittes eines vordersten Betätigungsweges 12 aufgehoben. Der Aufhebung der Bremswirkung der Dauerbremse 10 kann im Falle des Vorsehens eines Retarders durch mehrmaliges Antippen oder Betätigen des Fahroder Kupplungspedals 11 gestuft erfolgen. Es ist auch möglich, durch ein einmaliges Betätigen des Fahr- oder Kupplungspedals 11 etwa in einem dem vordersten, ersten Betätigungsweg 12 nachgeordneten zweiten, mittleren Betätigungsweges 13 des Fahr- oder Kupplungspedals 11 die Dauerbremse 10 schlagartig und vollständig (Kickdown-Funktion) zu deaktivieren. Der beim Auslösen dieser Kickdown-Funktion erfolgende Übergang vom vorderen Betätigungsweg 12 zum mittleren Betätigungsweg 13 des Fahr- oder Kupplungspedals 11 kann dem Fahrer durch einen definierten, beim Betätigen des Fahr- oder Kupplungspedals 11 wahrnehmbaren Druckpunkt angezeigt werden.

Gemäß einer hier nicht gezeigten Version können eine manuelle Abschaltung oder eine elektronisch geregelte, lastabhängige Abschaltung des Retarders und/oder der Motorbremse vorgesehen sein. Im Falle des Vorsehens eines ABS-Systems kann bei dessen Ausfall oder während dessen Regelvorganges eine automatische Abschaltung der wenigstens einen Dauerbremse vorgesehen sein. Nach Abschluß des Regelvorganges des ABS-Systems kann, gemäß einer hier nicht gezeigten Version, der wenigstens einen Dauerbremse ein Signal ihrer letztaktuellen Bremsstärke, beispielsweise durch das Steuergerät zuführbar sein. Somit können die vom Steuergerät registrierten und gespeicherten Daten der letztaktuellen Bremsstärke der Dauerbremse bei abgeschlossenem Regelvorgang des ABS-Systems als Option an die Dauerbremse weitergegeben werden, falls die Fahrsituation ein Setzen der Dauerbremse in gemerkter Position gestattet. Sind die in dem Steuergerät gespeicherten Daten der letztaktuellen Bremskraftstärke der Dauerbremse auf die aktuelle Fahrsituation nicht anwendbar, werden sie gelöscht.

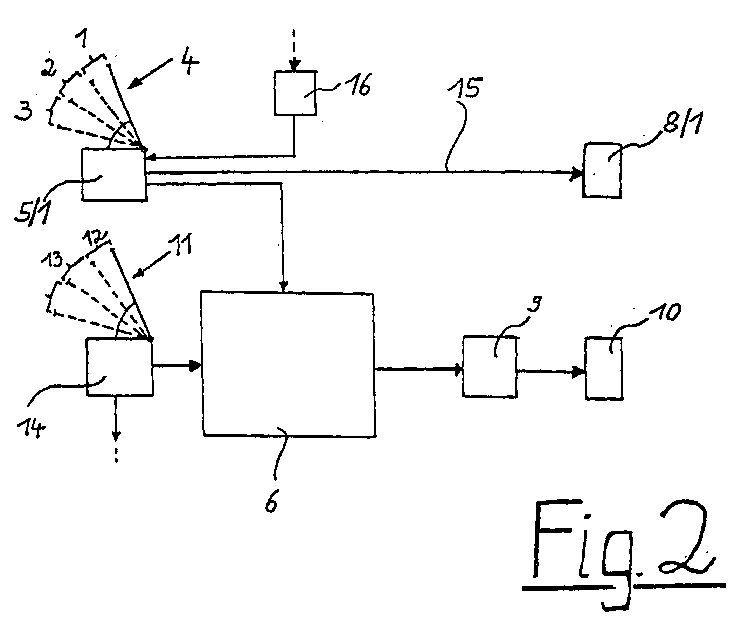

Fig. 2 zeigt schematisch vereinfacht eine im Blockschaltbild dargestellte, als Druckluft-Bremsanlage realisierte Fahrzeugbremse. Diese entspricht hinsichtlich des erfindungsgemäßen Prinzips der in Fig. 1 dargestellten, elektronisch geregelten Fahrzeugbremse. Die herkömmliche Druckluftbremse weist ein Bremspedal 4 auf, das sowohl eine pneumatisch betätigbare Betriebsbremse 8/1 als auch eine elektronisch geregelte Dauerbremse 10 ansteuert. Die durch eine Reibungsbremse realisierte Betriebsbremse 8/1 ist über einen Pneumatikkreislauf 15 mit einem Bremswertgeber 5/1 des Bremspedals 4 verbunden. Der Bremswertgeber 5/1 ist sowohl an ein elektronisches Steuergerät 6 als auch an einen pneumatischen Druckluftbehälter 16 angeschlossen. Von einem Druckluftbehälter 16 wird, je nach Pedalstellung des Bremspedals 4, die Reibungsbremse 8/1 über den Bremswertgeber 5/1 und den Pneumatikkreislauf 15 mit entsprechender Druckluft beaufschlagt. Des weiteren wird die in dem hier gezeigten Ausführungsbeispiel durch einen Retarder 10 realisierte Dauerbremse, je nach Pedalstellung des Bremspedals 4, über ein Stellglied 9 angesteuert. Dieses ist an dem mit dem Bremswertgeber 5/1 verbundenen, elektronischen Steuergerät 6 angeschlossen. Ein die Deaktivierung des Retarders 10 auslösendes Fahr- oder Kupplungspedal 11 ist über einen mit diesem verbundenen Geber 14 an das elektronische Steuergerät 6 angeschlossen. In einer hier nicht gezeigten Version kann alternativ oder zusätzlich zum Retarder 10 eine Motorbremse vorgesehen sein. Das elektronische Steuergerät 6 kann aus mehreren Steuergeräten, z. B. aus einem Retarder-Steuergerät und/oder einem Fahrzeugführungsrechner bestehen.

## Patentansprüche

1. Fahrzeugbremse für ein Nutzfahrzeug mit einem gemeinsamen Bremspedal (4) zur Ansteuerung einer Betriebsbremse (8) und wenigstens einer Dauerbremse (10, 10/1), wobei in einem Abschnitt eines vorderen Betätigungsweges (1) des Bremspedals (4) vorrangig die wenigstens eine Dauerbremse (10, 10/1) und in einem nachgeordneten Abschnitt eines zweiten Betätigungsweges (2) des Bremspedals (4) nachrangig die Betriebsbremse (8) betätigt ist, **dadurch gekennzeichnet, daß** bei Betätigung des Bremspedals (4) innerhalb eines definierten Abschnittes seines vordersten Betätigungsweges (1) die wenigstens eine Dauerbremse (10, 10/1) zunächst bleibend aktiviert und diese bei Betätigung eines in einem vorderen Betätigungsweg (12, 13) betätigten Fahr- oder Kupplungspedals (11) deaktivierbar ist.

2. Fahrzeugbremse nach Anspruch 1, **dadurch gekennzeichnet, daß** die wenigstens eine Dauerbremse (10, 10/1) nach wenigstens einem einmaligen Antippen oder Betätigen des Bremspedals (4) im definierten Abschnitt seines vordersten Betätigungsweges (1) aktiviert ist.

3. Fahrzeugbremse nach Anspruch 2, **dadurch gekennzeichnet, daß** als Dauerbremse (10, 10/1) eine Motorbremse (10/1) und/oder ein Retarder (10) vorgesehen ist.

4. Fahrzeugbremse nach Anspruch 3, **dadurch gekennzeichnet, daß** die Aktivierung des Retarders (10) durch aufeinanderfolgendes, separates Antippen oder Betätigen oder durch Verweilen des Bremspedals (4) im definierten Abschnitt seines vordersten Betätigungsweges (1) gestuft steigerbar ausgelöst ist.

5. Fahrzeugbremse nach einem der Ansprüche 3 oder 4, **dadurch gekennzeichnet, daß** die Deaktivierung des Retarders (10) durch aufeinanderfolgendes Antippen oder Betätigen des Fahr- oder Kupplungspedals (11) in dessen vorderem ersten Betätigungsweg (12) gestuft auslösbar ist.

6. Fahrzeugbremse nach einem der Ansprüche 3 bis 5, **dadurch gekennzeichnet, daß** die Deaktivierung des Retarders (10) durch eine einmalige Betätigung des Fahr- oder Kupplungspedals (11) in einem dem ersten Betätigungsweg (12) nachgeordneten zweiten Betätigungsweg (13) vollständig ausgelöst ist.

7. Fahrzeugbremse nach einem oder mehreren der vorangegangenen Ansprüche 1 bis 6, **dadurch gekennzeichnet, daß** bei Beginn der Deaktivierung der Dauerbremse (10) innerhalb des ersten Betätigungsweges (12) des Fahr- oder Kupplungspedals (11) mit diesem ein definierter, vom Fahrer wahrnehmbarer Druckpunkt zu überwinden ist.

8. Fahrzeugbremse nach einem der vorangegangenen Ansprüche 1 bis 7, **dadurch gekennzeichnet, daß** bei Beginn der Aktivierung der Betriebsbremse (8) bei Überschreiten des vordersten Betätigungsweges (1) des Bremspedals (4) mit diesem ein definierter, vom Fahrer wahrnehmbarer Druckpunkt zu überwinden ist.

9. Fahrzeugbremse nach einem der vorangegangenen Ansprüche 1 bis 8, **dadurch gekennzeichnet, daß** bei Ausfall oder während des Regelvorganges eines vorhandenen ABS-Systems eine automatische Abschaltung der wenigstens einen Dauerbremse (10, 10/1) vorgesehen ist, und daß nach Abschluß des Regelvorganges des ABS-Systems der Dauerbremse (10, 10/1) ein Signal ihrer letztaktuellen Bremsstärke über ein der Fahrzeugbremse zugehöriges Steuergerät (6) zuführbar ist.

10. Fahrzeugbremse nach einem der vorangegangenen Ansprüche 1 bis 9, **dadurch gekennzeichnet, daß** eine manuelle Abschaltung oder eine elektronisch geregelte, lastabhängige Abschaltung der wenigstens einen Dauerbremse (10, 10/1) vorgesehen ist.

## Claims

1. Vehicle brake for a commercial vehicle with a common brake pedal (4) for triggering a service brake (8) and at least one sustained-action brake (10, 10/1), whereby the at least one sustained-action brake (10, 10/1) is preferentially actuated in a section of the front actuating travel (1) of the brake pedal (4) and the service brake (8) is secondarily actuated in a secondary section of a second actuating travel (2) of the brake pedal (4), **characterised in that** upon actuation of the brake pedal (4) within a defined section of its frontmost actuating travel (1) the at least one sustained-action brake (10, 10/1) is initially activated permanently and can be deactivated upon actuation of an accelerator or clutch pedal (11) actuated in a front actuating travel (12, 13).

2. Vehicle brake according to Claim 1, **characterised in that** the at least one sustained-action brake (10, 10/1) is activated upon tapping or actuating the brake pedal (4) at least once in the defined section of its frontmost actuating travel (1).

3. Vehicle brake according to Claim 2, **characterised in that** the sustained-action brake (10, 10/1) is provided in the form of an engine brake (10/1) and/or a retarder (10).

4. Vehicle brake according to Claim 3, **characterised in that** the activation of the retarder (10) can be triggered in increasing stages by the consecutive, separate tapping, actuating or prolonged keeping of the brake pedal (4) in the defined section of its frontmost actuating travel (1).

5. Vehicle brake according to one of the Claims 3 or 4, **characterised in that** the deactivation of the retarder (10) can be triggered in stages by consecutively tapping or actuating the accelerator or clutch pedal (11) in its front first actuating travel (12).

6. Vehicle brake according to one of the Claims 3 or 5, **characterised in that** the deactivation of the retarder (10) is completely triggered by the one-off actuation of the accelerator or clutch pedal (11) in a second actuating travel (13) secondary to the first actuating travel (12).

7. Vehicle brake according to one or several of the foregoing Claims 1 to 6, **characterised in that** when deactivation of the sustained-action brake (10) commences within the first actuating travel (12) of the accelerator or clutch pedal (11) a defined pressure point which can be perceived by the driver is to be overcome by means of said accelerator or clutch pedal (11).

8. Vehicle brake according to one of the foregoing Claims 1 to 7, **characterised in that**, when activation of the service brake (8) commences as the frontmost actuating travel (1) of the brake pedal (4) is being passed over, a defined pressure point which can be perceived by the driver is to be overcome by means of said brake pedal (4).

9. Vehicle brake according to one of the foregoing Claims 1 to 8, **characterised in that** in the event of a failure or during the control action of an ABS system which may be present an automatic switch-off of the at least one sustained-action brake (10, 10/1) is provided and that after completion of the control action of the ABS system the sustained-action brake (10, 10/1) can be supplied with a signal of its latest braking force by means of a control unit (6) associated with the vehicle brake.

10. Vehicle brake according to one of the foregoing Claims 1 to 9, **characterised in that** a manual switch-off or an electronically controlled load-dependent switch-off of the at least one sustained-action brake (10, 10/1) is provided.

## Revendications

1. Frein de véhicule appliqué à un véhicule utilitaire comprenant une pédale de frein (4) commune pour commander un frein de fonctionnement (8) et au moins un frein permanent (10, 10/1), dont dans un segment d'une course d'actionnement avant (1) de la pédale de frein (4) au moins le frein permanent (10, 10/1) est actionné en priorité et dans un segment suivant d'une seconde course d'actionnement (2) de la pédale de frein (4), le frein de fonctionnement (8) est mis en oeuvre en second lieu,
**caractérisé en ce que**
par l'actionnement de la pédale de frein (4) dans un segment défini de sa course d'actionnement avant (1), au moins un frein permanent (10, 10/1) reste tout d'abord activé en continu et peut être désactivé par l'actionnement d'une pédale d'accélérateur ou d'une pédale d'embrayage (11) commandé dans sa première course d'actionnement (12, 13).

2. Frein de véhicule selon la revendication 1,
**caractérisé en ce qu'**
au moins un frein de véhicule (10, 10/1) est activé après au moins un effleurement ou actionnement de la pédale de frein (4) dans un segment défini de sa course d'actionnement avant (1).

3. Frein de véhicule selon la revendication 2,
**caractérisé en ce que**
le frein permanent (10, 10/1) est un frein moteur (10/1) et/ou un retardateur (10).

4. Frein de véhicule selon la revendication 3,
**caractérisé en ce que**
la mise en oeuvre du retardateur (10) est déclenchée de manière croissante, étagée par un effleurement ou un actionnement séparé, successif ou par le séjour de la pédale de frein (4) dans un segment défini de sa course d'actionnement avant (1).

5. Frein de véhicule selon l'une des revendications 3 ou 4,
**caractérisé en ce que**
le retardateur (10) est désactivé par un déclenchement étagé, par des effleurements ou actionnements successifs de la pédale d'accélérateur ou de la pédale d'embrayage (11) dans sa première course d'actionnement (12).

6. Frein de véhicule selon l'une des revendications 3 à 5,
**caractérisé en ce qu'**
on déclenche complètement la désactivation du retardateur (10) par un unique actionnement de la pédale d'accélérateur ou de la pédale d'embrayage (11) dans sa seconde course d'actionnement (13) qui fait suite à sa première course d'actionnement (12).

7. Frein de véhicule selon l'une des revendications 1 à 6,
**caractérisé en ce qu'**
au début de la désactivation du frein permanent (10) dans la première course d'actionnement (12) de la pédale d'accélérateur ou pédale d'embrayage (11), il faut dépasser un point de pression défini, perceptible par le conducteur.

8. Frein de véhicule selon l'une des revendications 1 à 7,
**caractérisé en ce qu'**
au début de l'activation du frein de fonctionnement (8), lors du dépassement de la course d'actionnement avant (1) de la pédale de frein (4), il faut vaincre un point de pression défini perceptible par le conducteur.

9. Frein de véhicule selon l'une des revendications 1 à 8,
**caractérisé en ce qu'**
en cas de défaillance du système ABS ou pendant l'opération de régulation de celui-ci, il est prévu une coupure automatique d'au moins un frein permanent (10, 10/1), et à la fin de l'opération de régulation du système ABS, le frein permanent (10, 10/1) reçoit un signal de sa dernière force de freinage actuelle fournie par l'appareil de commande (6) associé au frein de véhicule.

10. Frein de véhicule selon l'une des revendications 1 à 9,
**caractérisé par**
une coupure manuelle ou une coupure à régulation électronique en fonction de la charge d'au moins un frein permanent (10, 10/1).
